# DEMANDE DE BREVET EUROPEEN

(11) **EP 3 827 784 A1**
(43) Date de publication de la demande: **02.06.2021**
(21) Numéro de dépôt: 20207431.6
(22) Date de dépôt: 13.11.2020
(51) Int. Cl.: A61D 5/00, A61C 3/06

(54) **DISPOSITIF DE DENTISTERIE À OUTIL DE TRAVAIL ROTATIF**

(30) Priorité: 28.11.2019 FR 1913422
(71) Demandeur: Vet-Design, 35590 Saint-Gilles (FR)
(72) Inventeur: HUCHET, Yohann, 35850 Langan (FR)
(74) Mandataire: Vidon Brevets & Stratégie

(57) **Abrégé**

L'invention concerne un dispositif de limage (200) dentaire pour animaux comprenant :
- un arbre moteur (202), définissant un axe moteur (AM), portant un premier pignon conique (203),
- un outil de limage (205) rotatif comprenant un arbre porte-outil (206), définissant un axe d'outil (AO), portant un deuxième pignon conique (208) en prise avec ledit premier pignon conique (203), les premier et deuxième pignons coniques (203, 208) étant disposés en renvoi d'angle de sorte que les axes moteur et d'outil (AM, AO) s'étendent sensiblement à angle droit,
- un roulement (209) guidant la rotation dudit deuxième pignon conique (208) selon l'axe d'outil (AO).

Selon l'invention, le roulement (209) présente un espace cylindrique intérieur (Eci) creux et les premier et deuxième pignons coniques (203, 208) sont au moins partiellement en prise à l'intérieur dudit espace cylindrique intérieur (Eci) creux.

## Description

### 1. Domaine technique de l'invention

La présente invention relève du domaine de la conception et de la réalisation des dispositifs de dentisterie animale. Plus précisément, la présente invention concerne notamment, mais non exclusivement, les dispositifs de dentisterie équine présentant un outil de profilage.

### 2. État de la technique

Il est brièvement rappelé que certains animaux développent des excroissances sur leurs dents en raison d'une usure inégale et d'une croissance naturelle et permanente des dents dites « hypsodonte » à croissance prolongée de 2 à 3mm par an (à 7 ans) sauf sur les dents âgées ou l'éruption ralentit. Ces phénomènes peuvent notamment être observés sur les équins regroupant essentiellement des chevaux, les mulets, les ânes et les zèbres. Chez ces animaux, notamment chez le cheval, le maxillaire est plus large que la mandibule. De ce fait une partie des dents n'a pas d'antagoniste donc ne s'usent pas, d'où une formation d'excroissance appelées surdents. Les surdents sont des pointes d'émail (partie dure de la dent), la dentine primaire et secondaire et le cément central et périphérique (partie plus tendre de la dent) s'usent par l'abrasion des aliments ce qui rend les pointes d'émail ainsi dégagées plus agressives et coupantes. Elles provoquent des lésions, coupures parfois profondes sur les tissus mous, en partie jugale pour le maxillaire et en partie linguale pour la mandibule. La mastication étant douloureuse, le cheval mastique moins longtemps les aliments. Ceux-ci sont moins broyés ce qui engendre une mauvaise digestion et transformation des aliments, un risque d'amaigrissement accru, risque de coliques, gaspillage de nourriture (on retrouve des grains entiers dans les crottins). Les coupures sur les tissus mous peuvent servir de voies d'accès à différents agents pathogènes, comme par exemple le tétanos. D'autres pathologies comme la prognathie ou brachygnathie peuvent provoquer des surdents. Ces excroissances limitent le mouvement rostro-caudal de la mandibule. Ce manque de mobilité diminue l'amplitude du cycle masticatoire. Si ce mouvement est bloqué par les surdents, lors de la flexion de la tête, une pression se crée sur l'ATM (Articulation Temporo Mandibulaire). Le cheval est alors gêné dans ses mouvements ce qui explique qu'il ne réponde pas correctement aux actions de main du cavalier. L'équitation recherche une décontraction de la mâchoire appelée « cession de mâchoire » qui se caractérise par une déglutition du mors. Le cheval est alors relâché jusque dans son dos et peut se placer en équilibre (nuque fléchie, garrot remonté, abaissement des hanches et engagements des postérieurs). Ainsi une malocclusion peut nuire au travail du cheval. Pour avoir un cheval en bonne santé et facile à travailler, il est indispensable d'effectuer un profilage biannuel pour des chevaux de moins de 5 ans. Pendant cette période la bouche se transforme beaucoup : chute des dents déciduales (de lait), extraction des dents de loup, éruption des canines (crochets) et des molaires permanentes. Après 5 ans on dit que « la bouche est faite », sauf pathologie particulière, une visite annuelle est alors suffisante. Le profilage est le processus constituant à éliminer les surdents ou corriger certains autres défauts.

On connaît, dans l'état de la technique, différents d'instruments de profilage utilisés en dentisterie équine.

Parmi ces instruments on peut notamment citer les râpes manuelles, ne permettant pas une intervention toujours très rapide, et les râpes électriques, présentant des mécanismes plus élaborés.

Les râpes électriques connues comprennent généralement un moteur d'entrainement externe couplé à un manche de manipulation lui-même couplé, par le biais d'une rallonge si nécessaire, à une tête porte-outil à l'intérieur de laquelle un outil de limage mobile est disposé. Les couplages entre les différents éléments sont réalisés de manière réversible afin de simplifier le rangement et la maintenance de la râpe électrique.

On peut par exemple citer, comme outil de limage mobile, les fraises rotatives.

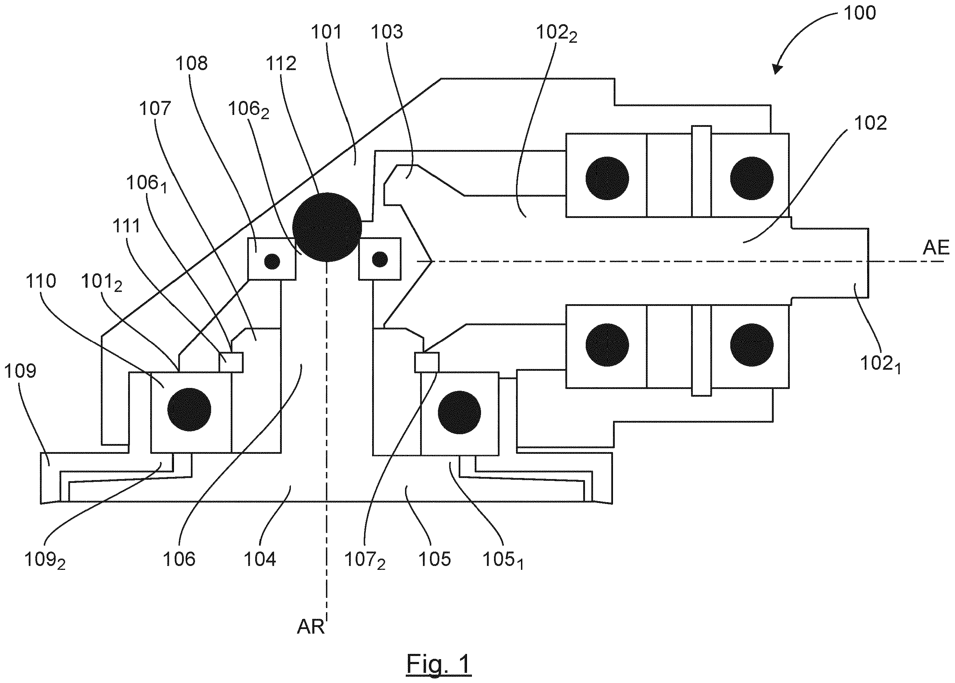

La **figure 1** illustre un exemple connu de tête porte-outil à fraise rotative destinée à être mise en œuvre dans une râpe électrique de dentisterie équine.

Dans l'exemple illustré, la tête porte-outil 100 comprend un corps 101 creux dans lequel s'étend un arbre moteur 102 rotatif définissant un axe d'entrainement AE. L'arbre moteur 102 présente une première extrémité 102₁, destinée à être reliée à un moteur (non représenté), et une deuxième extrémité 102₂, opposée à la première extrémité 102₁, portant un premier pignon conique 103.

Le corps creux 101 de la tête porte-outil 100 loge en outre un outil de limage rotatif 104 comprenant un arbre porte-outil 106 rotatif s'étendant perpendiculairement à l'axe d'entrainement AE et définissant un axe de rotation AR. L'arbre porte-outil 106 présente à une première extrémité un disque de limage 105, présentant un épaulement 105₁ situé du côté intérieur du corps 101. Un deuxième pignon conique 107, venant en prise avec le premier pignon conique 103 est monté sur l'arbre porte-outil 106 et vient en butée contre l'épaulement 105₁.

Ainsi, les premier et deuxième pignons conique 103, 107 forment un engrenage conique à axes AE, AR concourants, c'est-à-dire à angle droit.

La tête porte-outil 100 comprend en outre deux roulements guidant la rotation de l'outil de limage rotatif 104. Le premier roulement 108 est monté autour de la deuxième extrémité 106₂ de l'arbre porte-outil 106 et le deuxième roulement 110 est monté autour du deuxième pignon conique 107. L'outil de limage rotatif 104, le deuxième roulement 110 et une partie du deuxième pignon conique 107 sont montés à l'intérieur d'un déflecteur 109 qui assure la protection de l'outil de limage rotatif 104. La partie dentée du deuxième pignon conique 107 est disposée hors du déflecteur 109.

Les roulements 108, 110 assurent la résistance de l'arbre porte-outil 106 aux efforts radiaux, et permettent de minimiser les déplacements radiaux indésirables de l'outil de limage rotatif 104 à l'intérieur du corps 101.

Par ailleurs, la tête porte-outil 100 comprend des moyens de blocage en translation, selon l'axe de rotation AR, de l'outil de limage rotatif 104.

Des saillies 109₂, 101₂ formées respectivement sur les parois intérieures du déflecteur 109 et du corps creux 101, l'épaulement 105₁ du disque de limage 105 et une rondelle 111 montée sur le deuxième pignon conique 107 assurent, par effet de pincement, le maintien en position du deuxième roulement 108.

La rondelle 111 est disposée dans une rainure périphérique 107₂ ménagée sous la partie dentée du deuxième pignon conique 107. Ainsi, après que le deuxième roulement 108 a été monté autour du deuxième pignon conique 107 jusqu'à venir en butée contre l'épaulement 105₁ du disque de limage 105, l'insertion de la rondelle 111 dans le rainure périphérique 107₂ assure le blocage en translation du deuxième roulement 108.

Les moyens de blocage en translation comprennent également une bille 112, formant butée, disposée dans un logement intérieur du corps creux 101 et venant en appui contre la deuxième extrémité 106₂ de l'arbre porte-outil 106 opposée au disque de limage 105. De tel moyens de blocage permettent de minimiser les déplacements indésirables selon l'axe de rotation AR de l'outil de limage rotatif 104 à l'intérieur du corps creux 101.

La structure d'une telle tête porte-outil présente toutefois divers inconvénients.

Un inconvénient réside dans le fait qu'une telle tête porte-outil présente de nombreuses pièces mécaniques et est encombrante.

En effet, une tête porte-outil encombrante complexifie le travail de l'utilisateur (vétérinaire). Par exemple, une hauteur importante de la tête porte-outil peut empêcher l'utilisateur de positionner le disque de limage dans la position optimale pour réaliser l'opération de limage. De ce fait, l'utilisateur est obligé de multiplier les déplacements de la râpe électrique (pouvant provoquer des blessures à l'animal, au niveau des muqueuses de sa bouche notamment) et donc les opérations de profilage. En outre, l'efficacité du limage n'est pas optimale.

Par ailleurs, dans certains cas extrêmes, en dépit des multiples tentatives de l'utilisateur, certaines zones demeurent inatteignables pour une tête porte-outil encombrante. Généralement, de telles zones sont situées en partie distale des dernières molaires. Plus la tête porte-outil est proche du fond des mâchoires, plus l'espace pour mouvoir la tête porte-outil est faible. Dans de tels cas, les pointes acérées des dents ne peuvent pas être limées avec la râpe électrique, obligeant l'utilisateur à se rabattre sur une râpe manuelle moins encombrante.

On constate donc qu'une tête porte-outil encombrante rend le travail de l'utilisateur fastidieux, chronophage et de qualité moyenne, et présente des risques pour l'animal.

### 3. Exposé de l'invention

L'invention a pour but de résoudre tout ou partie des problèmes de l'art antérieur.

Plus précisément, l'invention a pour objectif de proposer une solution qui soit moins encombrante, simple de conception, facile à mettre en œuvre et/ou peu coûteuse à réaliser.

À cet effet, l'invention concerne un dispositif de limage dentaire pour animaux comprenant :
- un arbre moteur, définissant un axe moteur, portant un premier pignon conique,
- un outil de limage rotatif comprenant un arbre porte-outil, définissant un axe d'outil, portant un deuxième pignon conique en prise avec ledit premier pignon conique, les premier et deuxième pignons coniques étant disposés en renvoi d'angle de sorte que les axes moteur et d'outil s'étendent sensiblement à angle droit, et
- un roulement guidant la rotation dudit deuxième pignon conique selon l'axe d'outil.

Selon l'invention, le roulement présente un espace cylindrique intérieur creux et les premier et deuxième pignons coniques sont au moins partiellement en prise à l'intérieur dudit espace cylindrique intérieur creux.

Une telle disposition des premier et deuxième pignons coniques, à savoir au moins partiellement à l'intérieur de l'espace cylindrique intérieur, permet de réduire la hauteur du dispositif de limage, et donc l'encombrement de celui-ci.

Une telle réduction de l'encombrement du dispositif de limage se traduit par une amélioration de la maniabilité d'une râpe électrique présentant un tel dispositif de limage. L'utilisateur de la râpe électrique peut ainsi atteindre diverses parties d'accès difficile, telles que les dents situées dans le fond des mâchoires de l'animal. Cela se traduit également par une réduction des risques de blessures causées à l'animal au niveau des muqueuses de sa bouche notamment.

Par ailleurs, cette disposition particulière des premier et deuxième pignons coniques permet d'alléger la masse du dispositif de limage. En effet, en réduisant l'encombrement du dispositif de limage, le corps creux (qui est l'élément à l'intérieur duquel le mécanisme d'engrènement est disposé) est plus compact et nécessite une quantité de matériau moindre pour être fabriqué. Un tel allègement du dispositif de limage se traduit par une amélioration du confort de l'utilisateur. Ce dernier travaillant essentiellement avec le bras en l'air, un dispositif de limage présentant une masse faible minimise les risques d'apparition de différentes pathologies, telles que les troubles musculosquelettiques par exemple. Finalement, un dispositif de limage présentant une masse faible permet d'être utilisé par un panel d'utilisateurs varié, ce qui est avantageux au regard des tendances actuelles allant vers la féminisation du secteur d'activité.

En outre, d'un point de vue mécanique, un dispositif de limage conforme à l'invention permet de minimiser les risques de blocage. Cela se traduit par une réduction des sollicitations exercées sur la mécanique intérieure du dispositif de limage ainsi que de l'ensemble des éléments entrainant celui-ci (moteur, câble intérieur, pignons).

Selon un mode de réalisation particulier, le dispositif de limage comprend en outre une bague de couplage dudit deuxième pignon conique audit roulement montée sur ledit deuxième pignon conique, ladite bague de couplage étant dimensionnée pour positionner lesdits premier et deuxième pignons coniques au moins partiellement à l'intérieur dudit espace cylindrique intérieur creux.

La mise en œuvre d'une telle bague de couplage permet s'assurer, aisément et à moindre coût notamment, le déport des pignons à l'intérieur de l'espace cylindrique intérieur du roulement

Selon un mode de réalisation particulier, ladite bague de couplage présente à sa base une première portion annulaire couplée audit deuxième pignon conique, prolongée par une paroi latérale cylindrique, elle-même prolongée par un rebord annulaire couplé audit roulement.

Une telle structure de la bague de couplage permet, outre le fait de déporter les pignons, de contribuer au maintien en position du pignon d'outil et de transmettre le guidage en rotation fourni par le roulement.

Selon un mode de réalisation particulier, le dispositif de limage comprend en outre une entretoise annulaire montée sur ledit deuxième pignon conique entre la bague de couplage et l'outil de limage, ladite entretoise annulaire étant couplée audit deuxième pignon conique et portant un élément de retenue en position dudit roulement.

La coopération de l'élément de retenue de l'entretoise annulaire avec le rebord annulaire de la bague de couplage permet ainsi d'assurer le maintien en position de l'ensemble rotatif (outil de limage, pignon outil, bague de couplage et entretoise annulaire) sur le roulement. Une telle entretoise constitue une solution simple assurant un maintien efficace de l'ensemble rotatif sur le roulement.

Selon un mode de réalisation particulier, ledit outil de limage rotatif comprend un disque de limage présentant une tranche, et un déflecteur configuré pour recouvrir au moins partiellement la tranche dudit disque de limage.

Un tel déflecteur permet d'assurer la longévité du disque de limage. En effet, en recouvrant partiellement le disque de limage, celui-ci est protégé de l'environnement extérieur et notamment des chocs pouvant survenir lors de la manutention du dispositif de limage. Le déflecteur permet en outre de minimiser les risques de blessures pouvant être occasionnées lors de l'utilisation du dispositif de limage dentaire. Le déflecteur permet également d'assurer le maintien en position de la bague externe du deuxième roulement à l'intérieur du corps.

Selon un mode de réalisation particulier, le dispositif de limage comprend en outre un joint d'étanchéité annulaire disposé entre ladite entretoise annulaire et ledit déflecteur. Ainsi, le joint d'étanchéité permet d'assurer l'étanchéité du dispositif de limage.

### 4. Liste des figures

D'autres caractéristiques et avantages de l'invention apparaîtront plus clairement à la lecture de la description suivante d'un mode de réalisation, donné à titre de simple exemple illustratif et non limitatif, et des dessins annexés, parmi lesquels :
[Fig. 1] : la figure 1, précédemment décrite, est une coupe longitudinale, vue de côté, d'un exemple de tête porte-outil de l'état de la technique ;
[Fig. 2] : la figure 2 est une, vue de côté, d'un dispositif de limage selon un mode de réalisation de l'invention de la technique proposée ;
[Fig. 3] : la figure 3 est une focalisée sur l'espace cylindrique intérieur du deuxième roulement du dispositif de limage de la figure 2 ; et
[Fig. 4] : la figure 4 est une vue partiellement éclatée, selon l'axe de sortie, du dispositif de limage de la figure 2.

### 5. Description détaillée de l'invention

Par souci de clarté, de mêmes éléments ont été désignés par de mêmes références sur les différentes figures.

Par ailleurs, on utilise dans la présente description des termes d'orientation et de positionnement, tel que « dessus », « sous », « supérieur(e) », « inférieur(e) », etc., en se référant arbitrairement à une position d'utilisation de la tête porte-outil, appelée dispositif de limage dentaire par la suite, réalisant une procédure de profilage sur une mâchoire inférieure d'un animal. Dans une telle position d'utilisation, le disque de limage est disposé approximativement horizontalement (parallèle au sol) avec sa surface de limage orientée en direction du sol.

### 5.1 Principe général

Le principe général de la présente invention consiste à ce que les dentures des pignons coniques, portés par les arbres moteur et porte-outil respectivement d'un dispositif de limage dentaire, soient au moins partiellement en prise à l'intérieur de l'espace cylindrique intérieur du roulement de guidage en rotation de l'arbre porte-outil. En d'autres termes, la présente invention consiste à disposer au moins partiellement la zone d'engrènement des pignons coniques à l'intérieur de l'espace cylindrique intérieur du roulement de guidage en rotation de l'arbre porte-outil.

Une telle disposition permet de réduire la hauteur du dispositif de limage, et donc l'encombrement de celui-ci.

En effet, dans les dispositifs de limage dentaire connus, les dentures des pignons moteur et porte-outil sont intégralement situées au-dessus du roulement associé à l'arbre porte-outil, c'est-à-dire à l'extérieur de l'espace cylindrique intérieur du roulement de guidage en rotation de l'arbre porte-outil. En conséquent, la hauteur de la zone d'engrènement s'additionne intégralement avec la hauteur du roulement associé à l'arbre porte-outil. La technique proposée permet, via une intégration partielle de la zone d'engrènement des pignons dans l'espace cylindrique intérieur du roulement associé à l'arbre porte-outil, une addition partielle des hauteurs de l'engrènement et du roulement, ce qui se traduit par une réduction de la hauteur du dispositif de limage dentaire.

### 5.2 Description d'un mode de réalisation

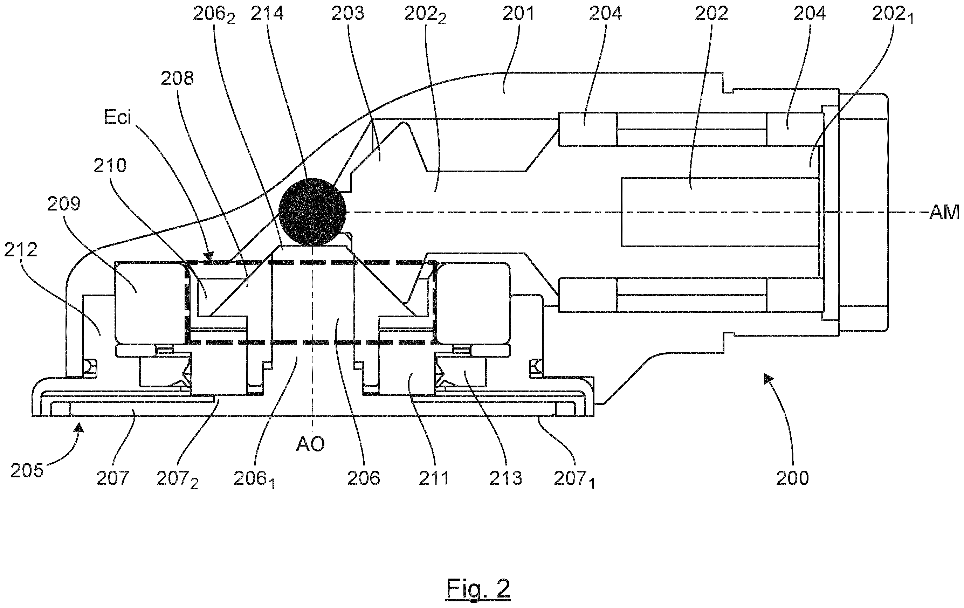

La **figure 2** illustre un dispositif de limage dentaire dans lequel les pignons coniques, portées par les arbres moteurs et porte-outil, s'engrènent partiellement dans l'espace cylindrique intérieur du roulement de guidage en rotation de l'arbre porte-outil, conformément à la technique proposée.

Le dispositif de limage dentaire 200 comprend un corps creux 201 configuré pour être raccordé à un manche de manipulation (non représenté) par l'intermédiaire d'une rallonge (non représentée).

Le corps 201 du dispositif de limage dentaire 200 porte un premier arbre, dit arbre moteur 202, s'étendant selon premier axe, dit axe moteur AM. L'arbre moteur 202 présente une première extrémité 202₁, apte à être reliée à une unité d'entrainement en rotation tel un moteur (non représenté), et une deuxième extrémité 202₂, opposée à la première extrémité 202₁, portant un premier pignon, dit pignon moteur 203.

Le dispositif de limage dentaire 200 comprend en outre des premiers roulements 204 guidant la rotation de l'arbre moteur 202 à l'intérieur du corps 201. Chaque premier roulement 204 comprend une bague intérieure, montée par force autour de l'arbre moteur 202, et une bague extérieure, montée coulissante contre la paroi interne du corps 201 du dispositif de limage dentaire 200.

Le corps du dispositif de limage dentaire 200 porte en outre outil de limage 205 rotatif comprenant un deuxième arbre, dit arbre porte-outil 206, et un disque de limage 207. L'arbre porte-outil 206 s'étend selon un deuxième axe, dit axe d'outil AO, orienté perpendiculairement à l'axe moteur AM. L'arbre porte-outil 206 comprend une première extrémité 206₁, solidaire du disque de limage 207 en son centre, et une seconde extrémité 206₂, opposée à la première extrémité 206₁, libre.

Le disque de limage 207 comprend une première face, présentant une surface de limage 207₁, et une deuxième face, opposée à la première face, présentant un premier épaulement 207₂ prolongé par un deuxième épaulement 207₃ de diamètre inférieur. Le deuxième épaulement 207₃ est solidaire de l'arbre porte-outil 206. L'arbre porte-outil 206 et le disque de limage 207 sont coaxiaux.

Dans ce mode de réalisation, le disque de limage 207 et l'arbre porte-outil 206 sont réalisés en une seule pièce. Toutefois, dans un mode de réalisation alternatif, le disque de limage 207 et l'arbre porte-outil 206 sont deux éléments distincts solidarisés de manière à former un ensemble monobloc.

L'arbre porte-outil 206 porte un deuxième pignon, dit pignon porte-outil 208, en prise avec le pignon moteur 203. Les pignons moteur 203 et porte-outil 208 sont agencés de telle sorte que le pignon moteur 203 engrène le pignon porte-outil 208 de sorte que la rotation de l'arbre moteur 203 provoque la rotation de l'arbre outil 208 par le biais de cet engrenage.

Par ailleurs, les pignons moteur 203 et porte-outil 208 sont des pignons coniques disposés en renvoi d'angle. En d'autres termes, les axes moteur AM et d'outils AO des pignons moteur 203 et porte-outil 208 respectivement sont concourant et s'étendent en angle droit.

Le dispositif de limage dentaire 200 comprend en outre un deuxième roulement 209 guidant la rotation de l'arbre porte-outil 206 à l'intérieur du corps 201 du dispositif de limage dentaire 200. Le deuxième roulement 209, définissant un espace cylindrique intérieur Eci creux, est disposé autour du pignon porte-outil 208 et est situé entre l'outil de limage 205 et l'arbre moteur 202.

Par ailleurs, le dispositif de limage dentaire 200 comprend une bague de couplage 210 du pignon porte-outil 208 au deuxième roulement 209. En d'autres termes, le deuxième roulement 209 est couplé au pignon porte-outil 208 par l'intermédiaire de la bague de couplage 210.

La bague de couplage 210 et le pignon porte-outil 208, qui présentent chacun une structure particulière décrite en détails par la suite, permettent aux pignons moteur 203 et porte-outil 208 d'être partiellement en prise à l'intérieur de l'espace cylindrique intérieur Eci du deuxième roulement 209, conformément à l'invention.

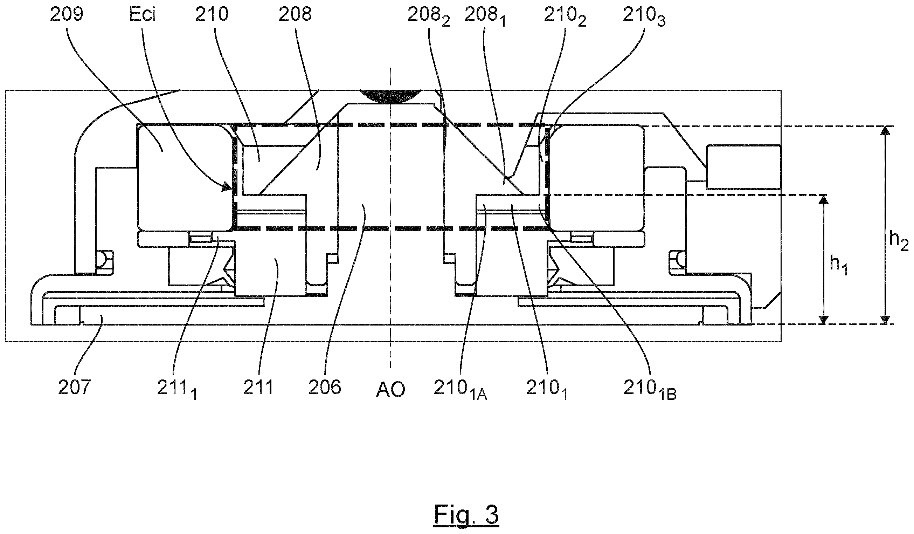

Tel qu'illustré en figure 3, le pignon porte-outil 208 comprend une partie cylindrique dont une extrémité est prolongée par une partie conique portant des dentures.

Le pignon porte-outil 208 présente un premier épaulement 208₁, ménagé sur la surface périphérique, dite extérieure, de la partie cylindrique du pignon, réduisant partiellement le diamètre du pignon porte-outil 208.

Par ailleurs, le pignon porte-outil 208 présente un trou 208₂ traversant, ménagée dans l'extrémité libre de la partie cylindrique et de manière coaxiale à celle-ci, configurée pour recevoir l'arbre porte-outil 206.

En outre, le pignon porte-outil 208 présente un deuxième épaulement augmentant partiellement le diamètre du trou 208₂ traversant.

La bague de couplage 210 comprend à sa base une première portion annulaire, appelée par la suite base annulaire plane 210₁, orientée perpendiculaire à l'axe d'outil AO, présentant un bord intérieur 210_{1A} libre et un bord extérieur 210_{1B} prolongé perpendiculairement par une paroi latérale cylindrique 210₂ s'étendant parallèlement à l'axe d'outil AO. La paroi latérale cylindrique 210₂ est elle-même prolongée par un rebord annulaire, formant un premier élément de retenue 210₃, orienté vers l'extérieur, c'est-à-dire à l'opposé du bord intérieur.

Dans l'exemple illustré, le rebord annulaire 210₃ est obtenu en courbant le sommet de la paroi latérale cylindrique 210₂ de la bague de couplage 210.

Le bord intérieur 210_{1A} est configuré pour être monté à force autour de la surface extérieure du pignon porte-outil 208 jusqu'à ce que la base annulaire plane 210₁ vienne prendre appui contre le premier épaulement 208₁ du pignon porte-outil 208. Le premier épaulement 208₁ du pignon porte-outil 208 forme une butée au coulissement de la bague de couplage 210. La paroi latérale cylindrique 210₂ est configurée pour être plaquée contre la paroi intérieure de la bague intérieure du deuxième roulement 209 de manière à assurer le guidage en rotation du pignon porte-outil 208. Le rebord annulaire 210₃ est configuré pour venir en appui contre la partie supérieure de la bague intérieure du deuxième roulement 209.

Une fois le dispositif de limage dentaire 200 assemblé de manière à ce que la bague de couplage soit dans la configuration illustrée en figure 3, et en prenant le disque de limage 207 comme référence, il est à noter que le premier élément de retenue 210₃ est situé à une hauteur plus élevée que base annulaire plane 210₁. En d'autres termes, la bague de couplage 210 comprend une première portion de couplage, à savoir la base annulaire plane 210₁, située à une première hauteur h1 et une deuxième portion de couplage, à savoir le premier élément de retenue 210₃, située à une deuxième hauteur h2, plus élevée que la première hauteur h1.

Une telle bague de couplage 210 permet, outre la réduction du diamètre du pignon porte-outil, d'abaisser la position de celui-ci.

Ainsi, une partie des dentures du pignon porte-outil 208 sont situées sous le premier élément de retenue 210₃ de la bague de couplage 210, c'est-à-dire dans l'espace cylindrique intérieur Eci du deuxième roulement 209. En abaissant la position de l'arbre moteur 202, une partie des dentures de celui-ci se retrouvent également dans l'espace cylindrique intérieur Eci creux du deuxième roulement 209.

Une telle configuration permet de réduire la hauteur, et donc l'encombrement du dispositif de limage dentaire 200.

Le dispositif de limage dentaire 200 comprend en outre une entretoise annulaire 211 coopérant avec la bague de couplage 210 pour assurer le maintien de la bague intérieure du deuxième roulement 209. En d'autres termes, l'entretoise annulaire 211 constitue un deuxième élément de couplage du pignon porte-outil 208 au deuxième roulement 209. Tel qu'illustré, l'entretoise annulaire 211, de section transversale rectangulaire, est située entre la bague de couplage 210 et le disque de limage 207.

L'entretoise annulaire 211 présente une face intérieure configurée pour être montée par force autour de la surface extérieure du pignon de sortie. La face intérieure assure la fixation de l'entretoise au pignon porte-outil 208.

L'entretoise annulaire 211 présente une face extérieure, opposée à la face intérieure, portant un deuxième élément de retenue 211₁ configuré pour venir en appui contre la partie inférieure de la bague intérieure du deuxième roulement 209. Dans l'exemple illustré, le deuxième élément de retenue 211₁ est une saillie.

Ainsi, une fois le dispositif de limage dentaire 200 assemblé, les premier et deuxième éléments de retenue 210₃, 211₁ exercent un effort de pincement sur la bague intérieure du deuxième roulement 209 assurant le couplage du pignon de sortie 208 au deuxième roulement 209.

En outre, l'entretoise annulaire 211 présente une face supérieure configurée pour être en appui contre la base annulaire plane 210₁ de la bague de couplage 210. La paroi latérale cylindrique 210₂ de la bague de couplage 210 affleure avec la face extérieure de l'entretoise annulaire 211. En d'autres termes, la face supérieure de l'entretoise annulaire 211 et base annulaire plane 210₁ de la bague de couplage 210 présentent des dimensions sensiblement identiques.

L'entretoise annulaire 211 présente une face inférieure, opposée à la face supérieure, configurée pour être en appui contre le premier épaulement 207₂ du disque de limage 207.

Ainsi, une fois le dispositif de limage dentaire 200 assemblé, le disque de limage 207 exerce une pression sur l'entretoise annulaire 211 renforçant l'effort de pincement réalisé par la coopération des premier et deuxième éléments de retenue 210₃, 211₁.

Le dispositif de limage dentaire 200 comprend en outre un déflecteur 212 recouvrant au moins partiellement la tranche du disque de limage 207.

Un tel déflecteur 212 permet d'assurer la longévité du disque de limage 207 En effet, en recouvrant partiellement le disque de limage 207, celui-ci est protégé de l'environnement extérieur et notamment des chocs pouvant survenir lors de la manutention du dispositif de limage 200.

Le déflecteur 212 permet en outre de minimiser les risques de blessures, aussi bien pour l'animal que l'utilisateur, pouvant être occasionnées lors de l'utilisation du dispositif de limage dentaire 200.

Le déflecteur 212 permet également d'assurer le maintien en position de la bague externe du deuxième roulement 209 à l'intérieur du corps 201.

Dans l'exemple illustré, le déflecteur 212 comprend une face extérieure sur laquelle des premiers moyens de fixation sont ménagés. Les premiers moyens de fixation sont configurés pour coopérer avec des deuxièmes moyens de fixation complémentaires ménagés dans le corps du dispositif de limage dentaire. De tels moyens de fixation permettent d'assurer la fixation du déflecteur 212 sur le corps du dispositif de limage 200. Le déflecteur 212 comprend en outre une paroi interne sur laquelle est ménagé un épaulement configuré pour prendre appui sous la bague extérieure du deuxième roulement 209.

Ainsi, une fois le dispositif de limage dentaire 200 assemblé, la bague extérieure du deuxième roulement 209 est maintenue en position à l'intérieur du corps 201 du dispositif de limage dentaire 200 empêchant ainsi tout mouvement axial du deuxième roulement 209.

La paroi interne du déflecteur 212 porte en outre un joint d'étanchéité 213 annulaire, configuré pour prendre appui contre l'entretoise annulaire 211, assurant l'étanchéité du dispositif de limage dentaire 200.

Par ailleurs, dans l'exemple illustré, le pignon moteur 203 présente un orifice traversant (non visible) permettant le montage du pignon moteur 203 sur la deuxième extrémité 202₂ de l'arbre moteur.

Dans l'exemple illustré, l'arbre moteur 202 et le pignon moteur 203 sont réalisés de manière monobloc, et plus précisément en une unique pièce.s Le dispositif de limage 200 comprend en outre une butée 214 disposée dans un logement intérieur du corps creux 201 et venant en appui contre la deuxième extrémité 206₂ de l'arbre porte-outil 206.

Une telle butée permet de minimiser les déplacements indésirables selon l'axe porte-outil AO, engendrés par les efforts exercés sur l'outil de limage.

Dans l'exemple illustré, la butée 214 est formée par une bille.

La bille 214 est en outre en contact, et donc maintenue en position, par l'extrémité 202₂ de l'arbre moteur 202.

La **figure 3**, précédemment décrite, détaille les structures particulières de la bague de couplage 210 et du pignon d'outil 208 permet le déport partiel de l'engrènent des pignons moteur 203 et porte-outil 208 dans l'espace cylindrique intérieur Eci creux du deuxième roulement 209.

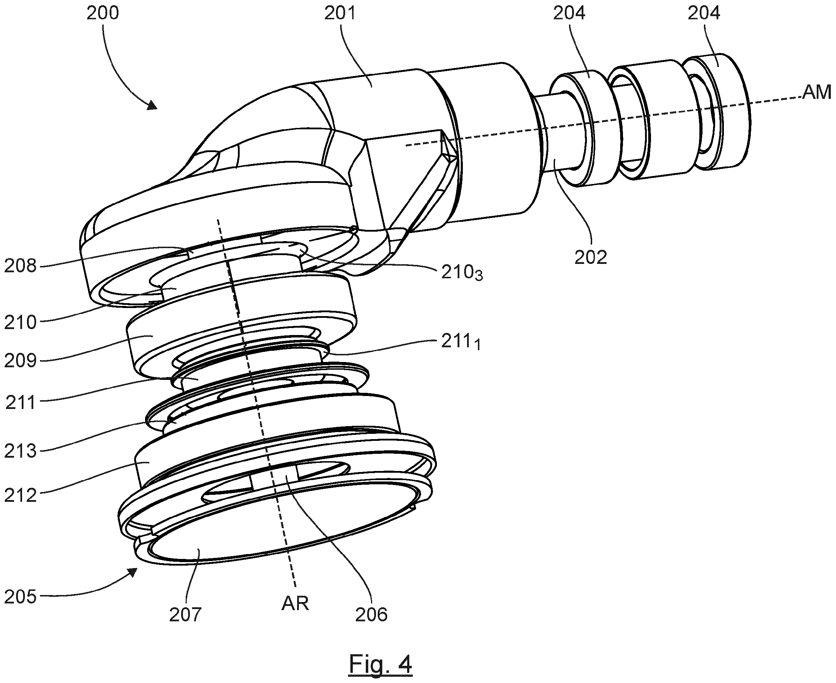

La **figure 4**, qui est une vue en éclatée du dispositif de limage dentaire 200 de la figure 1, permet d'illustrer davantage la structure des différents éléments mécaniques précédemment décrits.

Bien évidemment, la technique proposée n'est pas limitée aux modes de réalisation décrits précédemment et fournis uniquement à titre d'exemple. Elle englobe diverses modifications, formes alternatives et autres variantes que pourra envisager l'homme du métier dans le cadre de la problématique posée.

La technique proposée a été décrite en relation avec un dispositif de limage dentaire destiné au profilage des dents d'un cheval. Il est toutefois évident que l'homme du métier saura adapter les dimensions de technique proposée afin d'adapter celle-ci aux dispositifs de limage dentaire destinés à d'autre animaux, tels que les vaches et les lamas par exemple.

## Revendications

1. Dispositif de limage (200) dentaire pour animaux comprenant :
- un arbre moteur (202), définissant un axe moteur (AM), portant un premier pignon conique (203),
- un outil de limage (205) rotatif comprenant un arbre porte-outil (206), définissant un axe d'outil (AO), portant un deuxième pignon conique (208) en prise avec ledit premier pignon conique (203), les premier et deuxième pignons coniques (203, 208) étant disposés en renvoi d'angle de sorte que les axes moteur et d'outil (AM, AO) s'étendent sensiblement à angle droit,
- un roulement (209) guidant la rotation dudit deuxième pignon conique (208) selon l'axe d'outil (AO), **caractérisé en ce que** le roulement (209) présente un espace cylindrique intérieur (Eci) creux et **en ce que** les premier et deuxième pignons coniques (203, 208) sont au moins partiellement en prise à l'intérieur dudit espace cylindrique intérieur (Eci) creux.

2. Dispositif de limage (200) selon la revendication 1, **caractérisé en ce qu'**il comprend en outre une bague de couplage (210) dudit deuxième pignon conique (208) audit roulement (209) montée sur ledit deuxième pignon conique (208), ladite bague de couplage (210) étant dimensionnée pour positionner lesdits premier et deuxième pignons coniques (203, 208) au moins partiellement à l'intérieur dudit espace cylindrique intérieur (Eci) creux.

3. Dispositif de limage (200) selon la revendication 2, **caractérisé en ce que** ladite bague de couplage (210) présente à sa base une première portion annulaire (210₁) couplée audit deuxième pignon conique (208), prolongée par une paroi latérale cylindrique (210₂), elle-même prolongée par un rebord annulaire (210₃) couplé audit roulement (209).

4. Dispositif de limage (200) selon la revendication 3, **caractérisé en ce qu'**il comprend en outre une entretoise annulaire (211) montée sur ledit deuxième pignon conique (208) entre la bague de couplage (210) et l'outil de limage (205), ladite entretoise annulaire (211) étant couplée audit deuxième pignon conique (208) et portant un élément de retenue (211₁) en position dudit roulement (208).

5. Dispositif de limage (200) selon l'une quelconque des revendications 1 à 4, **caractérisé en ce que** ledit outil de limage rotatif (205) comprend un disque de limage (207) présentant une tranche, et **en ce que** ledit dispositif de limage (200) comprend en outre un déflecteur (212) configuré pour recouvrir au moins partiellement la tranche dudit disque de limage (207).

6. Dispositif de limage (200) selon les revendications 4 et 5, **caractérisé en ce qu'**il comprend en outre un joint d'étanchéité (213) annulaire disposé entre ladite entretoise annulaire (211) et ledit déflecteur (212).
